Europäisches Patentamt

European Patent Office

Office européen des brevets

(11) Numéro de publication: **0 245 146 B1**

# FASCICULE DE BREVET EUROPEEN

(45) Date de publication de fascicule du brevet:
**11.12.91**

(51) Int. Cl.⁵: **G02F 1/11**, G02F 1/33,
G02B 27/10

(21) Numéro de dépôt: **87400928.5**

(22) Date de dépôt: **22.04.87**

(54) Deflecteur acousto-optique polychromatique.

(30) Priorité: **25.04.86 FR 8606001**

(43) Date de publication de la demande:
**11.11.87 Bulletin 87/46**

(45) Mention de la délivrance du brevet:
**11.12.91 Bulletin 91/50**

(84) Etats contractants désignés:
**DE GB IT NL**

(56) Documents cités:
EP-A- 0 018 150
EP-A- 0 075 700
US-A- 3 624 272
US-A- 4 141 625

(73) Titulaire: **SEXTANT Avionique**
**5/7 rue Jeanne Braconnier Parc Tertiaire**
**F-92368 Meudon la Forêt Cedex(FR)**

Titulaire: **Société AUTOMATES ET AUTOMATI-**
**SMES (S.A.R.L.)**
**6-8 rue de Versailles**
**F-78470 Saint Remy les Chevreuse(FR)**

(72) Inventeur: **Vichon, Didier**
**99 rue de Paris**
**F-91400 Orsay(FR)**
Inventeur: **Bardon, Dominique**
**13 Boulevard Garibaldi**
**F-75015 Paris(FR)**
Inventeur: **Encrenaz, Christian**
**7 Résidence du Châtenau**
**F-91190 Gif-sur-Yvette(FR)**

(74) Mandataire: **Bloch, Robert et al**
**2, square de l'Avenue du Bois**
**F-75116 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

L'invention se rapporte à un perfectionnement apporté au déflecteur acousto-optique polychromatique qui fait l'objet des brevets français 2 557 985 et 2 575 840. Plus précisément, ce perfectionnement est utilisable avec chacun des deux modes de réalisation qui sont décrits dans ces documents.

Le brevet 2 557 985 est relatif à un déflecteur comprenant plusieurs cristaux distincts en paratélurite qui sont traversés par un unique faisceau polarisé de plusieurs rayons de longueurs d'onde différentes; dans chacun de ces cristaux sont envoyés des ultrasons qui modulent comme on le désire respectivement lesdits rayons. Quand ces rayons et ces cristaux sont au nombre de trois, les longueurs d'onde des rayons sont avantageusement celles des couleurs rouge, verte et bleue, ce qui permet, quand on combine les rayons modulés, de former des images en couleur. Les rayons modulés sortent successivement du cristal le long de trois directions respectives qui sont à la fois très proches les unes des autres et sensiblement parallèles.

Le brevet 2 575 840 concerne un premier perfectionnement selon lequel les trois cristaux sont remplacés par un cristal unique à taille particulière dans lequel on envoie des signaux ultrasonores en des points espacés; il en résulte que le faisceau incident, qui est convenablement polarisé, émet en relation avec chacun de ces points espacés un rayon émergent modulé. Les trois rayons émergents sont aussi très proches les uns des autres et sensiblement parallèles.

En fait, quand on entre plus exactement dans le détail des choses, on constate que les rayons ne peuvent pas être véritablement parallèles puisque leur déviation dans chaque cristal ou dans le cristal unique dépend à la fois de la longueur d'onde $\lambda$ du faisceau incident et de la fréquence acoustique F injectée dans le cristal. Pour chacun des rayons, la déviation est proportionnelle à $\lambda$ F. Par conséquent, bien qu'ils paraissent sensiblement parallèles, les divers rayons émergents sont divergents. Entre le rayon bleu et le rayon vert l'angle est de 10 minutes d'angle environ et entre le rayon rouge et le rayon bleu la divergence est de 30 minutes d'angle.

Or, pour réaliser une image correcte en couleurs par superposition de trois rayons aux couleurs fondamentales, il est nécessaire que les rayons modulés soient strictement colinéaires.

Le but principal de la présente invention est donc de perfectionner le déflecteur acousto-optique polychromatique des brevets précités afin que les rayons émergents modulés soient rendus colinéaires à leur sortie de ce déflecteur.

Dans un déflecteur du type défini plus haut, comprenant un unique cristal ou plusiers cristaux en paratellurite en combinaison avec des transducteurs piézo-électriques qui sont reliés chacun respectivement à des émetteurs d'ultrasons associés à des émetteurs de signaux à radiofréquence, ce déflecteur ayant un axe optique principal pour un faisceau incident à plusieurs rayons de fréquences distinctes $\lambda$ 1, $\lambda$ 2, $\lambda$ 3,... traversant le cristal ou les cristaux, et plusieurs axes optiques secondaires respectivement pour chacun des rayons modulés à fréquences $\lambda$ 1, $\lambda$ 2, $\lambda$ 3,... émergents du ou des cristaux, selon l'invention, sur chacun des axes optiques secondaires est placé un miroir réfléchissant; ces miroirs sont disposés les uns derrière les autres à une position et avec une inclinaison par rapport à l'axe optique secondaire correspondant telles que les rayons réfléchis sont colinéaires, le miroir le plus éloigné du ou des cristaux pouvant être un miroir réfléchissant optique classique et chacun des miroirs placés entre ce miroir le plus éloigné et le ou les cristaux étant un miroir holographique à bande de réflexion centrée sur la longueur d'onde du rayon émergent correspondant. Autrement dit, chaque miroir holographique est disposé de telle sorte que le point de réflexion sur ce miroir du rayon qui lui correspond en longueur d'onde est substantiellement confondu avec le point de traversée de ce même miroir par les rayons qui ont été réfléchis sur les miroirs situés plus en arrière, et l'inclinaison de ce même miroir holographique est telle que le rayon qu'il réfléchit est substantiellement colinéaire avec les rayons qui traversent ce miroir.

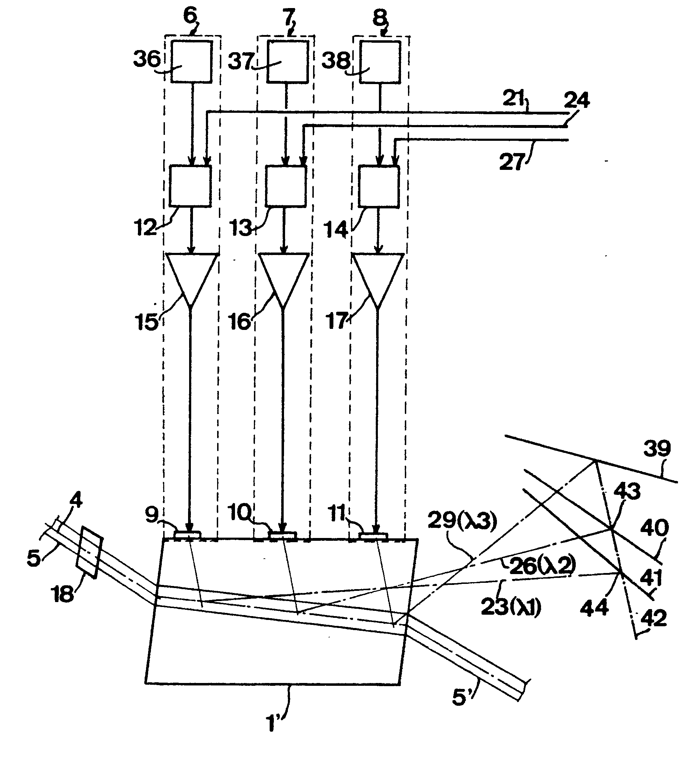

Pour bien faire comprendre l'invention, on donnera maintenant à titre d'exemple une description d'un mode de réalisation destiné à la modulation et à la transmission colinéairement de trois rayons qui correspondent aux couleurs fondamentales, rouge, bleu, vert. On se reportera à la figure unique annexée qui est une représentation simplifiée d'un déflecteur acousto-optique polychromatique conforme à l'invention.

Le déflecteur représenté est celui du brevet 2 557 985 mais avec le perfectionnement apporté par le brevet 2 575 840.

Un unique cristal 1′ en paratellurite à taille off axis est traversé par un faisceau 5 à axe optique 4. En amont de ce cristal 1′ est placé une lame de BREWSTER 18 de polarisation. Sur une face du cristal 1′ sont montés trois transducteurs piézo-électriques 9,10,11 en des points successifs espacés dans le sens de l'axe optique 4 pour recevoir des fréquences ultrasonores de valeur croissante dans la direction du faisceau traité 5.

Chaque transducteur 9, 10, 11 est relié à une source respective d'ultrasons 6, 7, 8 associée à un émetteur de signaux à radiofréquence 36, 37, 38 par l'intermédiaire de modulateurs 12, 13, 14 et d'amplificateurs 15, 16, 17. Chaque modulateur est relié par une ligne correspondante 21, 24, 27 à un organe de commande (non représenté) qui rend conducteur quand on le désire le modulateur 12, 13, 14 correspondant et déclenche, par conséquent, le fonctionnement du transducteur 9,10 ou 11.

Dans le présent exemple le faisceau incident 5 est composé de trois rayons distincts, émis par exemple par des lasers, à longueurs d'onde λ 1, λ 2, λ 3 qui sont celles des couleurs fondamentales, rouge, bleu, vert. Les transducteurs 9, 10, 11 émettent dans le cristal 1', quand ils sont rendus actifs, des ultrasons à des fréquences successivement plus élevées du premier transducteur 9 au dernier transducteur 11, dans la direction du faisceau traité 5.

En l'absence de toute émission des transducteurs 9, 10, 11 le faisceau 5 est réfracté en 5'. Chaque transducteurs 9, 10, 11 agit respectivement sur un des rayons du faisceau 5 et, en même temps qu'il le module, il en modifie la polarisation de sorte qu'à partir du point de rencontre de l'axe optique 4 du faisceau 5 avec l'axe des émissions ultrasonores des transducteurs 9, 10, 11 on obtient trois rayons distincts modulés émergents de longueur d'onde λ 1, λ 2, λ 3 respectivement représentés seulement par leurs axes optiques 23, 26, 29 pour une meilleure clarté du dessin et que l'on appelle ici axes optiques secondaires pour les distinguer de l'axe optique principal 4 du faisceau incident 5 et réfracté 5'.

Ces rayons émergents à axes optiques secondaires 23, 26, 29 paraissent parallèles mais ils sont, en réalité, faiblement différents, parce qu'ils ont des points d'origine différents, et principalement parce que leur déviation est proportionnelle à λ F comme on l'a expliqué plus haut.

Le déflecteur de l'invention comprend autant de miroirs réfléchissants 39, 40, 41 qui sont placés respectivement sur les axes optiques secondaires 23, 26, 29, et successivement en s'éloignant du cristal 1' de sorte qu'on distingue un miroir 39 plus éloigné de ce cristal 1' et des miroirs intermédiaires 40,41 situés entre ce cristal 1' et le miroir 39 le plus éloigné.

Le miroir 39 le plus éloigné est un miroir optique classique qui reçoit le rayon modulé λ 3 d'axe optique secondaire 29 et le réfléchit le long d'un axe optique 42.

Les miroirs intermédiaires 40,41 sont des miroirs holographiques qui ont été réalisés pour ne réfléchir qu'une longueur déterminée et pour laisser passer les autres.

Les miroirs holographiques et leur fabrication sont bien connus; il n'est pas nécessaire de les décrire. En pratique chaque miroir holographique a une plage de réflexion étroite d'une largeur de 10 nm environ que l'on centre, pendant la réalisation, sur la longueur d'onde à réfléchir.

Le rayon modulé λ 3 réfléchit par le miroir optique classique 39 le plus éloigné traverse le miroir holographique 40 en un point 43 et le miroir holographique 41 en un point 44. Le miroir 40 est disposé pour recevoir au point 43 le rayon λ 2 d'axe optique secondaire 26 et il est incliné pour réfléchir ce rayon λ 2 le long de l'axe optique 42 du rayon λ 3 réfléchi par le miroir classique 39. Le miroir holographique 41 est disposé pour recevoir au point 44 le rayon λ 1 d'axe optique secondaire 23 et il est incliné pour réfléchir ce rayon λ 1 le long du même axe optique 42.

De cette façon, les trois rayons modulés de longueur d'onde λ 1, λ2, λ 3, sont réfléchis chacun par un miroir correspondant 41,40,39 colinéairement le long de l'axe optique 42, en traversant les miroirs holographiques par lesquels il ne sont pas réfléchis.

On notera que le miroir 39 le plus éloigné du cristal 1' pourrait être aussi un miroir holographique adapté à la réflexion du rayon émergent de longueur d'onde λ 3, mais ceci n'apporterait aucun avantage particulier. Il est plus simple et plus économique d'utiliser un miroir optique classique.

Bien entendu, le miroirs 39,40,41 sont montés sur des supports (non représentés) munis de moyens de réglage en position.

## Revendications

1. Déflecteur acousto-optique pour séparer d'un faisceau composé de plusieurs rayons à longueurs d'onde différentes (λ1,λ2,λ3) au moins deux rayons émergents déviés et pour diriger colinéairement ces rayons déviés, comprenant au moins un cristal optique (1') acousto-optique traversé par ledit faisceau, et des moyens commandables pour engendrer et appliquer des ondes ultrasonores à ce cristal (1'), ledit faisceau ayant un axe optique principal (4) et les rayons émergents ayant respectivement des axes optiques secondaires (23,26,29), caractérisé en ce que sur chacun des axes optiques secondaires (23,26,29) est placé un miroir réfléchissant (42,41,39) ces miroirs étant situés les uns derrière les autres à partir du cristal (1') avec un miroir (39) plus éloigné de ce cristal (1') et des miroirs intermédiaires (41,40), ces miroirs intermédiaires (41,40) étant des miroirs holographiques à bande de réflexion centrée sur la longueur d'onde du rayon émergent correspondant dévié par le cristal (1'), les miroirs holographiques intermédiaires (41,40) étant disposés et orientés pour réfléchir lesdits rayons émergents colinéairement avec le rayon réfléchi par le miroir (39) le plus éloigné du cristal (1').

2. Déflecteur selon la revendication 1, caractérisé en ce que le miroir (39) le plus éloigné du cristal (1') est un miroir optique classique.

3. Déflecteur selon la revendication 1, caractérisé en ce que ledit cristal (1') est capable de produire trois rayons émergents distincts ayant des longueurs correspondantes à trois couleurs fondamentales telles que le rouge, le vert, le bleu, le miroir (39) le plus éloigné de ce cristal (1') étant disposé pour réfléchir le rayon de plus courte longueur d'onde et les deux miroirs intermédiaires holographiques (40,41) étant disposés pour réfléchir colinéairement respectivement les deux autres rayons de longueur d'onde plus élevée.

## Claims

1. Acousto-optical deflector for separating at least two deflected emerging rays from a beam composed of a plurality of rays at different wavelengths ($\lambda 1$, $\lambda 2$, $\lambda 3$) and for directing said deflected rays collinearly, comprising at least an acousto-optical optical crystal (1') through which said beam passes and controllable means for generating and applying ultrasonic waves to this crystal (1'), said beam having a main optical axis (4) and the emerging rays having respective secondary optical axes (23,26,29) characterized in that a reflecting mirror (42,41,39) is respectively placed on each of the secondary optical axes (23,26,29), said mirrors being situated one behind another going away from the crystal (1') with a mirror (39) which is furthest away from the crystal (1') and intermediate mirrors (41,40), these intermediate mirror (41,40) being holographic mirrors having a reflection waveband centered on the wavelength of the corresponding emerging ray deflected by the crystal (1'), the intermediate holographic mirrors (41,40) being disposed and oriented to reflect said emerging rays collinearly with the ray reflected by the mirror (39) which is furthest away from the crystal (1').

2. Deflector according to claim 1, characterized in that the mirror (39) which is furthest away from the crystal (1') is a conventional optical mirror.

3. Deflector according to claim 1, characterized in that said crystal (1') is capable of producing three distinct emerging rays having wavelengths corresponding to three primary colors such as red, green, and blue, the mirror (39) which is furthest away from the crystal (1') being disposed to reflect the ray having the shortest wavelength and the two intermediate holographic mirrors (40,41) being disposed to reflect respectively the other two rays of longer wavelengths collinearly.

## Patentansprüche

1. Akustooptischer Lichtablenker, um von einem aus mehreren Strahlen verschiedener Wellenlänge ($\lambda 1$, $\lambda 2$, $\lambda 3$) zusammengesetzten Bündel mindestens zwei austretende, abgelenkte Strahlen zu separieren und um diese abgelenkten Strahlen kolinear zu lenken, bestehend aus mindestens einem, von dem genannten Strahlenbündel durchquerten akustooptischen optischen Kristall (1') und aus regelbaren Mitteln, um Ultraschallwellen zu erzeugen und an diesen Kristall (1') abzugeben, wobei das genannte Strahlenbündel eine optische Hauptachse (4) besitzt und die austretenden Strahlen jeweils eine Sekundärachse (23,26,29) aufweisen, dadurch gekennzeichnet, daß auf jeder der optischen Sekundärachsen (23,26,29) ein reflektierender Spiegel (42,41,39) plaziert ist, wobei diese Spiegel vom Kristall (1') ausgehend hintereinander angeordnet sind, mit einem von diesem Kristall (1') weiter entfernten Spiegel (39) und Zwischenspiegeln (41,40), wobei diese Zwischenspiegel (41,40) holographische Spiegel mit einer auf die Wellenlänge des entsprechenden, vom Kristall (1') abgelenkten austretenden Strahles zentrierten Reflexionsbande sind, wobei die holographischen Zwischenspiegel (41,40) so angeordnet und ausgerichtet sind, daß sie die genannten austretenden Strahlen kolinear mit dem Strahl reflektieren, der von dem am weitesten vom Kristall (1') entfernten Spiegel (39) reflektiert wird.

2. Lichtablenker gemäß Anspruch 1, dadurch gekennzeichnet, daß der am weitesten vom Kristall (1') entfernte Spiegel (39) ein klassischer optischer Spiegel ist.

3. Lichtablenker gemäß Anspruch 1, dadurch gekennzeichnet, daß der genannte Kristall (1') drei unterschiedliche austretende Strahlen erzeugen kann, deren Wellenlänge drei Grundfarben wie rot, grün, blau entspricht, wobei der von diesem Kristall (1') am weitesten entfernte Spiegel (39) so angeordnet ist, daß er den Strahl mit kürzerer Wellenlänge reflektiert und die beiden holographischen Zwischenspiegel (40,41) so angeordnet sind, daß sie die beiden anderen Strahlen mit größerer Wellenlänge kolinear reflektieren.